# FASCICULE DE BREVET EUROPEEN

(11) **EP 3 461 701 B1**
(45) Date de publication et mention de la délivrance du brevet: **24.02.2021**
(21) Numéro de dépôt: 18186776.3
(22) Date de dépôt: 01.08.2018
(51) Int. Cl.: B60S 1/38, B60S 1/40

(54) **DISPOSITIF DE CONNEXION D'UN BALAI D'ESSUYAGE A UN BRAS D'ENTRAINEMANT POUR VEHICULE**
VORRICHTUNG ZUR VERBINDUNG EINES WISCHERBLATTS MIT EINEM SCHEIBENWISCHERANTRIEBSARM FÜR FAHRZEUG
DEVICE FOR CONNECTING A WINDSCREEN-WIPER BLADE TO A DRIVE ARM FOR A VEHICLE

(30) Priorité: 29.09.2017 FR 1759150
(43) Date de publication de la demande: 03.04.2019
(73) Titulaire: Valeo Systèmes d'Essuyage, 78322 Le Mesnil Saint Denis (FR)
(72) Inventeur: GAUCHER, Vincent, 63500 ISSOIRE (FR); HOUSSAT, Stéphane, 63500 ISSOIRE (FR); MOULEYRE, Guillaume, 63500 ISSOIRE (FR)
(74) Mandataire: Valeo Visibility

(56) Documents cités:
- WO-A1-2005/102802
- DE-A1-102007 016 479
- FR-A1- 2 830 823
- US-A1- 2015 246 659

## Description

L'invention se rapporte au domaine de l'essuyage des surfaces vitrées d'un véhicule, notamment automobile, et elle concerne plus particulièrement un dispositif de connexion entre un balai d'essuyage et un bras d'entraînement de celui-ci.

Les systèmes d'essuyage pour véhicules automobiles sont conçus pour retirer, par balayage, les liquides et salissures qui peuvent perturber la vision que le conducteur a de son environnement. Ces systèmes d'essuyage comprennent généralement au moins un bras d'entraînement qui effectue un mouvement de va-et-vient angulaire sur une surface vitrée du véhicule, et au moins un balai d'essuyage équipé d'une lame d'essuyage réalisée dans un matériau plastique souple. En frottant contre cette surface vitrée, la lame racle l'eau et un certain nombre de salissures pour les évacuer en dehors du champ de vision du conducteur.

Quelle que soit la configuration du balai d'essuyage : étriers articulés qui retiennent la lame d'essuyage en plusieurs zones distinctes, ou vertèbre métallique qui maintient la lame d'essuyage sur toute sa longueur, le balai d'essuyage est rattaché au bras d'entraînement du système d'essuyage par un dispositif de connexion qui comprend généralement un connecteur et un adaptateur. Le connecteur est solidaire du balai d'essuyage, et l'adaptateur est une pièce configurée, d'une part, pour coopérer avec le connecteur et, d'autre part, pour être engagée avec une partie terminale du bras d'entraînement. Le connecteur et l'adaptateur coopèrent alors pour réaliser la fixation du balai d'essuyage sur le bras d'entraînement et autorisent une liaison articulée entre ces deux derniers organes.

Le dispositif de connexion de tels systèmes d'essuyage peuvent également comprendre un capot monté en rotation sur le connecteur et qui comprend une ouverture autorisant le passage d'une partie terminale du bras d'entrainement. Dans ce type de dispositif de connexion, l'adaptateur est généralement logé dans le connecteur et comprend un arbre destiné à recevoir un crochet ménagé sur la partie terminale du bras d'entrainement, autorisant ainsi la liaison articulée entre le balai d'essuyage et son bras d'entrainement.

Lorsque l'utilisateur souhaite monter le balai d'essuyage sur son bras d'entrainement, il doit faire pivoter ce capot jusqu'à une position dite « ouverte » afin de pouvoir engager la partie terminale de ce bras d'entrainement sur l'adaptateur logé dans le connecteur. Une fois le balai d'essuyage monté sur son bras d'entrainement, l'utilisateur fait de nouveau pivoter le capot, en sens inverse, jusqu'à une position dite « fermée ».

Un premier inconvénient de ce dispositif de connexion réside dans l'amplitude selon laquelle le capot peut pivoter autour du connecteur. En effet, lorsque l'utilisateur souhaite effectuer le montage du balai d'essuyage sur son bras d'entrainement, il existe un risque d'une rotation trop importante du capot par rapport au connecteur qui peut endommager le capot et alors le rendre inutilisable.

Un deuxième inconvénient de ces dispositifs de connexion réside dans le fait qu'une fois ouvert, le capot a tendance à basculer spontanément vers sa position fermée, du fait de la gravité, ce qui peut gêner l'utilisateur qui souhaite réaliser le montage du balai d'essuyage sur son bras d'entrainement.

On connaît également le document US2015/246659 A1 qui décrit un dispositif de connexion selon le préambule de la revendication 1.

La présente invention s'inscrit dans ce contexte et vise à proposer un dispositif de connexion permettant de remédier à ces inconvénients grâce à un dispositif de maintien du capot sur le connecteur dans au moins une position précise et adaptée au montage du balai d'essuyage sur le bras d'entraînement.

L'objet de la présente invention concerne ainsi un dispositif de connexion destiné à relier un balai d'essuyage à un bras d'entrainement d'un système d'essuyage pour véhicule, comprenant au moins un connecteur et un capot monté en rotation sur le connecteur, le dispositif de connexion comprenant au moins un dispositif de maintien du capot sur le connecteur dans au moins une position. Selon l'invention, le dispositif de maintien détermine la position du capot sur le connecteur en limitant la rotation de ce capot sur le connecteur selon deux sens de rotation.

Selon un aspect de la présente invention, le dispositif de maintien du capot sur le connecteur peut permettre de maintenir le capot alternativement dans une première position ou dans une deuxième position, cette première position étant distincte de la deuxième position.

Par exemple, la première position peut correspondre à une position fermée, c'est-à-dire une position dans laquelle le capot recouvre au moins partiellement le connecteur sur lequel il est monté, tandis que la deuxième position peut correspondre à une position ouverte, c'est-à-dire une position configurée pour permettre l'assemblage d'une partie terminale du bras d'entrainement sur un adaptateur logé dans le connecteur. Autrement dit, lorsque le capot est dans sa position fermée, ce capot et le connecteur sur lequel il est monté s'étendent longitudinalement tous deux selon une même direction, tandis que lorsque le capot est dans sa position ouverte, le capot et le connecteur s'étendent longitudinalement selon deux directions perpendiculaires, ou sensiblement perpendiculaires.

Avantageusement, la présente invention permet ainsi de maintenir le capot dans une position fermée, assurant ainsi un blocage fiable et pérenne de la partie terminale du bras d'entrainement sur l'adaptateur, ou dans une position ouverte, permettant le montage de ce balai d'essuyage sur son bras d'entrainement, sans risquer une rotation trop importante du capot qui pourrait l'endommager et le rendre inutilisable. De plus, le maintien du capot en position ouverte facilite l'insertion de la partie terminale du bras d'entrainement en évitant que ce capot ne se rabatte spontanément, et gène finalement le montage du balai d'essuyage sur le bras d'entraînement, étant entendu que ce montage est habituellement assuré par une personne inexpérimentée dans le domaine, par exemple le propriétaire du véhicule équipé du système d'essuyage faisant usage du dispositif de connexion selon l'invention.

Selon la présente invention, le dispositif de connexion comprend une liaison pivot entre le capot et le connecteur, cette liaison pivot comprenant au moins un palier et au moins un toron, le toron étant configuré pour être reçu dans un orifice ménagé dans le palier.

Selon un exemple de réalisation de la présente invention, le palier de la liaison pivot entre le capot et le connecteur est issu de matière avec le capot et le toron de cette liaison pivot est quant à lui issu de matière avec le connecteur.

Selon un autre exemple de réalisation de la présente invention, le palier de la liaison pivot entre le capot et le connecteur est issu de matière avec le connecteur et le toron de cette liaison pivot est quant à lui issu de matière avec le capot du connecteur.

Avantageusement, selon cet autre exemple de réalisation, le connecteur peut comprendre deux paliers et le capot deux torons respectivement destiné à être reçu dans l'un des orifices ménagés dans les paliers du connecteur. Dans ce cas, on comprend que les paliers sont symétriques par rapport à un plan longitudinal et vertical médian du connecteur et que les torons sont symétriques par rapport à un plan longitudinal et vertical médian du capot. Le plan longitudinal médian du connecteur et le plan longitudinal médian du capot sont confondus lorsque le capot est en position fermée.

Selon la présente invention, le dispositif de maintien du capot sur le connecteur est disposé au moins en partie sur le palier. Selon cet aspect de la présente invention, une partie du dispositif de maintien du capot sur le connecteur est ainsi disposé sur le palier, ce palier étant par exemple issu de matière avec le connecteur et une autre partie de ce dispositif de maintien est quant à elle disposée à proximité du toron, ce toron étant par exemple issu de matière avec le capot. On entend par « à proximité du toron » le fait que cette autre partie du dispositif de maintien peut être répartie autour de ce toron. On comprend que chacune de ces parties du dispositif de maintien du capot sur le connecteur est configurée pour coopérer avec l'autre.

Selon la présente invention, le dispositif de maintien du capot sur le connecteur comprend au moins une nervure et au moins une gorge, la nervure étant destinée à être reçue dans la gorge.

Avantageusement, le dispositif de maintien du capot sur le connecteur peut comprendre une nervure, avantageusement une unique nervure, au moins une première gorge et au moins une deuxième gorge, la nervure étant destinée à être reçue alternativement dans chacune des gorges.

Ainsi, lorsque la nervure est reçue dans l'une des gorges, par exemple la première gorge, le capot est maintenu dans sa première position, et lorsque cette nervure est reçue dans l'autre gorge, en l'espèce la deuxième gorge, le capot est maintenu dans sa deuxième position.

Selon un exemple de réalisation de la présente invention, la nervure est ménagée sur le capot et au moins une gorge est ménagée sur le connecteur.

Selon cet exemple de réalisation, la nervure peut par exemple être issue de matière avec le toron du capot.

Selon un autre exemple de réalisation, la nervure est ménagée sur le connecteur et au moins une gorge est ménagée sur le capot.

Selon un aspect de la présente invention, le capot est configuré pour prendre une première position ou une deuxième position, cette première position et cette deuxième position étant déterminées par le dispositif de maintien du capot sur le connecteur, le capot dans sa première position s'étendant selon une première direction longitudinale et le capot dans sa deuxième position s'étendant selon une deuxième direction différente de la première direction.

Avantageusement, la première direction longitudinale peut être perpendiculaire ou sensiblement perpendiculaire à la deuxième direction.

On comprend que, selon cet aspect de la présente invention, le dispositif de maintien du capot sur le connecteur comprend au moins deux gorges, respectivement agencées pour limiter la rotation de ce capot, soit lorsque ce dernier est dans sa première position, soit lorsqu'il est dans sa deuxième position. En d'autres termes, ces deux gorges délimitent un secteur angulaire du palier sur lequel elles sont ménagées, ce secteur angulaire étant, selon cet aspect de la présente invention, sensiblement égal à 90°.

Optionnellement, le dispositif de maintien du capot sur le connecteur peut comprendre un organe agencé pour augmenter l'effort de rotation du capot par rapport au connecteur entre les deux positions prises par le capot.

Selon un mode de réalisation de la présente invention, l'organe agencé pour augmenter l'effort de rotation du capot par rapport au connecteur entre sa première position et sa deuxième position est une pente progressive formée entre deux gorges du dispositif de maintien du capot sur le connecteur.

Selon une caractéristique de la présente invention, la première gorge et la deuxième gorge du dispositif de maintien du capot sur le connecteur délimitent, ensemble, un premier secteur angulaire et une troisième gorge peut être ménagée dans un deuxième secteur angulaire opposé au premier secteur angulaire par rapport à un axe de rotation de la liaison pivot.

Selon cette caractéristique de la présente invention, la troisième gorge peut par exemple être ménagée dans le prolongement de l'une des deux gorges, en passant par l'axe de rotation de la liaison pivot.

Cette troisième gorge est configurée pour guider l'assemblage du capot sur le connecteur. Ainsi, un procédé de montage du capot sur le connecteur peut comprendre une première étape de disposition de la nervure dans la troisième gorge puis une étape de translation du capot sur le connecteur, jusqu'à ce que le toron de la liaison pivot se loge dans l'orifice ménagé sur le palier de cette liaison pivot.

Si la troisième nervure est ménagée dans le prolongement de l'une des deux autres nervures, on comprend qu'une fois le toron en position dans l'orifice du palier, la nervure ménagée sur le capot est logée dans la gorge positionnée dans le prolongement de laquelle est ménagée la troisième gorge.

Avantageusement, la troisième gorge est ménagée dans le prolongement de la première gorge, cette première gorge étant configurée pour maintenir le capot dans sa première position, c'est-à-dire sa position fermée.

Selon une variante, la troisième gorge peut être ménagée dans le prolongement de la deuxième gorge, cette deuxième gorge étant configurée pour maintenir le capot dans sa deuxième position, à savoir sa position ouverte.

Si la troisième gorge n'est pas ménagée dans le prolongement de l'une des deux autres gorges, le procédé de montage du capot comprend une étape supplémentaire de rotation du capot jusqu'à ce que la nervure soit logée dans la première gorge ou dans la deuxième gorge.

Avantageusement, le dispositif de connexion peut comprendre deux dispositifs de maintien du capot sur le connecteur, symétriques par rapport à un plan longitudinal et vertical médian du connecteur.

La présente invention concerne également un système d'essuyage pour véhicule comprenant au moins un balai d'essuyage relié à un bras d'entrainement par un dispositif de connexion selon la présente invention.

La présente invention concerne encore un véhicule automobile comprenant au moins un système d'essuyage selon la présente invention.

L'invention concerne enfin un procédé de montage d'un balai d'essuyage sur un bras d'entrainement d'un système d'essuyage selon la présente invention, comprenant une étape d'ouverture d'un capot monté en rotation sur un connecteur du balai d'essuyage, une étape de blocage de ce capot dans sa position ouverte grâce au dispositif de maintien du capot sur le connecteur, une étape d'insertion d'une partie terminale du bras d'entrainement sur un adaptateur logé dans le connecteur, une étape de fermeture du capot et une étape de blocage de ce capot dans sa position fermée, grâce au dispositif de maintien de ce capot sur le connecteur.

On comprend que l'étape d'ouverture du capot correspond à une étape au cours de laquelle un utilisateur fait pivoter le capot selon un premier sens de rotation jusqu'à sa deuxième position et que l'étape de fermeture de ce capot correspond à une étape au cours de laquelle l'utilisateur fait pivoter le capot selon un deuxième sens de rotation, opposé au premier sens de rotation, jusqu'à sa première position.

D'autres caractéristiques, détails et avantages ressortiront plus clairement à la lecture de la description détaillée donnée ci-après à titre indicatif, en relation avec les différents modes de réalisation s illustrés sur les figures suivantes :
- la figure 1 est une représentation schématique d'un système d'essuyage comprenant un dispositif de connexion selon la présente invention ;
- les figures 2 et 3 sont des vues en perspectives d'un connecteur du dispositif de connexion selon la présente invention sur lequel est monté en rotation un capot, ces figures illustrant respectivement une première position et une deuxième position de ce capot par rapport au connecteur ;
- la figure 4 est une vue, de côté, d'une liaison pivot entre le capot et le connecteur, cette liaison pivot comprenant un dispositif de maintien en position du capot sur le connecteur dans au moins une position ;
- les figures 5 et 6 illustrent respectivement une première extrémité longitudinale du capot et une première extrémité longitudinale du connecteur ;
- la figure 7 est une vue en perspective d'un mode de réalisation particulier du dispositif de maintien du capot sur le connecteur illustré sur les figures 4 à 6.

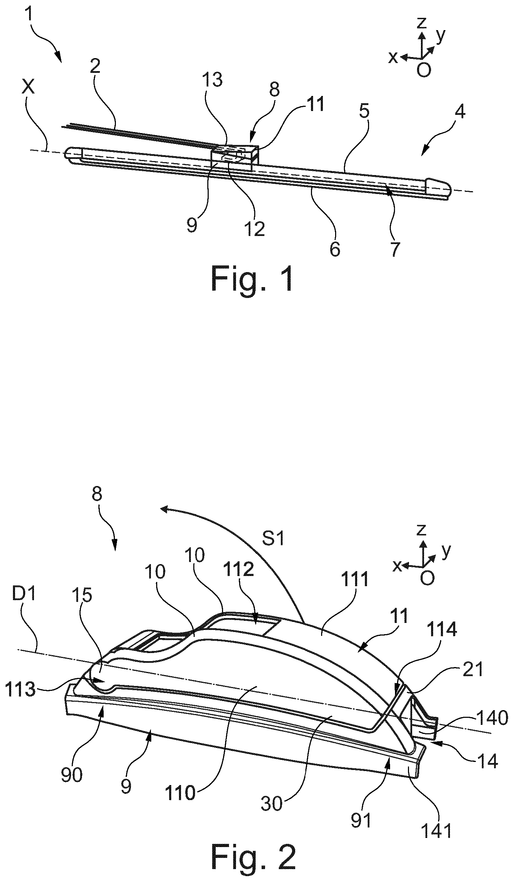

Dans la suite de la description, les dénominations longitudinales ou transversales se réfèrent à l'orientation d'un connecteur d'un dispositif de connexion d'un système d'essuyage. La direction longitudinale correspond à une direction d'extension longitudinale du connecteur, cette direction longitudinale étant parallèle à un axe Ox d'un repère orthonormé par exemple représenté à la figure 1. Une direction transversale correspond à une direction parallèle à un axe Oy de ce repère orthonormé, l'axe Oy étant perpendiculaire à l'axe Ox. Une direction verticale correspond à une direction parallèle à un axe Oz du repère orthonormé, l'axe Oz étant perpendiculaire à l'axe Ox et à l'axe Oy.

Les coupes longitudinales mentionnées ci-après sont réalisées selon des plans de coupe dans lesquels s'inscrivent les axes Ox et Oz de ce repère orthonormé.

En référence à la figure 1, un véhicule automobile est couramment équipé d'un système d'essuyage 1 pour évacuer une eau et/ou des salissures présentes sur une surface vitrée, notamment une lunette arrière ou un pare-brise de véhicule automobile. Le système d'essuyage 1 comprend un bras d'entraînement 2 apte à effectuer un mouvement de va-et-vient angulaire le long et au-dessus de la surface vitrée. Le bas d'entraînement 2 peut comprendre un entraîneur, non illustré ici, chargé d'assurer une liaison mécanique entre le bras d'entraînement 2 et un arbre d'entrainement en rotation du bras d'entraînement 2.

Le système d'essuyage 1 comprend aussi un balai d'essuyage 4 qui s'étend principalement selon un axe longitudinal X, parallèle à l'axe Ox du repère orthonormé tel que représenté sur la figure 1. Le balai d'essuyage 4 comprend au moins un déflecteur d'air 5 et une lame d'essuyage 6 reliés l'un à l'autre par un élément de structure 7 du balai d'essuyage 4, ce dernier étant alors dépourvu de palonniers. Un tel élément de structure 7 peut par exemple être formé par un unique organe de flexion, ou par une pluralité d'organes de flexion ou encore par un support dans lequel sont enfilés un ou plusieurs organes de flexion.

Le déflecteur d'air 5 est prévu pour transformer une pression appliquée par un flux d'air circulant le long de la surface vitrée en une force d'appui du balai d'essuyage 4 contre la surface vitrée du véhicule automobile. La lame d'essuyage 6 est la pièce du balai d'essuyage 4 en contact direct avec la surface vitrée et elle est configurée pour évacuer l'eau et/ou les salissures présentes sur cette dernière. Le déflecteur d'air 5, la lame d'essuyage 6 et l'élément de structure 7 forment un ensemble semi-rigide porté par un dispositif de connexion 8, interposé entre le bras d'entraînement 2 et le balai d'essuyage 4.

Ce dispositif de connexion 8 comprend un connecteur 9 dans lequel est logé un adaptateur - non représenté ici -, et sur lequel un capot 11 est monté en rotation. L'adaptateur comprend classiquement un arbre transversal configuré pour recevoir un crochet 12 d'une partie terminale 13 du bras d'entrainement 2.

Le dispositif de connexion 8 assure ainsi une liaison mécanique à pivotement entre la partie terminale 13 du bras d'entraînement 2 et le balai d'essuyage 4. Ce dispositif de connexion 8 permet également de séparer le balai d'essuyage 4 du bras d'entraînement 2, en vue d'un remplacement du balai d'essuyage 4.

En plus d'une fonction esthétique, le capot 11, monté en rotation sur le connecteur 9, est destiné à bloquer la partie terminale 13 du bras d'entrainement 2 sur l'adaptateur du dispositif de connexion 8. Ce capot 11 peut ainsi prendre une première position dite « fermée » dans laquelle il bloque cette partie terminale 13 du bras d'entrainement 2 ou une deuxième position dite « ouverte » autorisant l'insertion de cette partie terminale 13 dans le dispositif de connexion 8.

Selon la présente invention, le dispositif de connexion 8 comprend au moins un dispositif de maintien du capot 11 sur le connecteur 9 dans au moins l'une de ces deux positions. Ce dispositif de maintien du capot 11 sur le connecteur 9 sera plus amplement décrit dans la suite de la description.

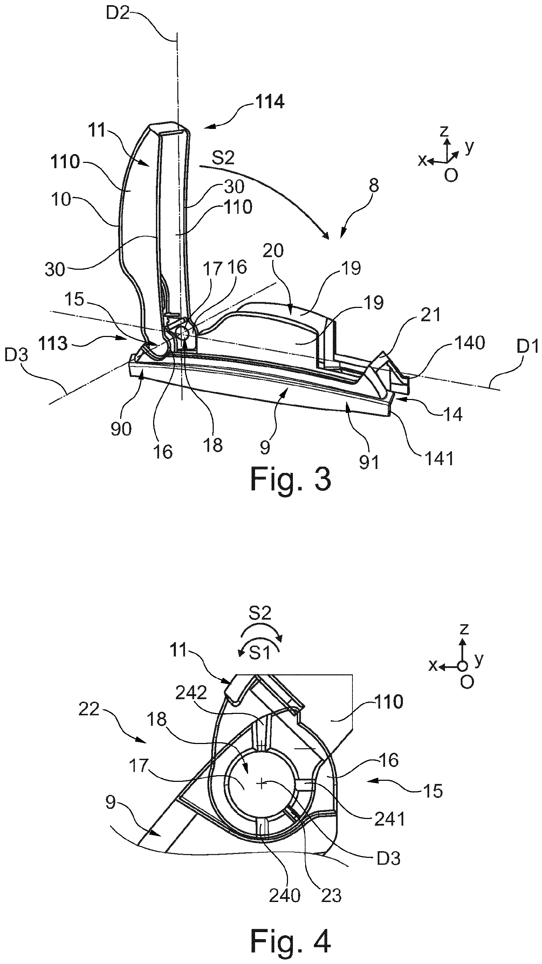

Les figures 2 et 3 illustrent respectivement la première position du capot 11 sur le connecteur 9 et la deuxième position de ce capot 11 sur le connecteur 9.

La première position du capot 11 illustrée sur la figure 2 est la position dite « fermée », c'est-à-dire la position qui permet le blocage du bras d'entrainement sur le balai d'essuyage comprenant le connecteur 9. Depuis cette première position, le capot 11 peut atteindre sa deuxième position grâce à une rotation selon un premier sens de rotation S1, tel que représenté sue cette figure 2.

La deuxième position du capot 11 illustrée sur la figure 3 est la position dite « ouverte », c'est-à-dire la position de ce capot 11 qui autorise l'insertion du crochet de la partie terminale du bras d'entrainement sur l'adaptateur logé dans le connecteur 9. Depuis cette deuxième position, le capot 11 peut atteindre sa première position grâce à une rotation selon un deuxième sens de rotation S2, opposé au premier sens de rotation S1, tel que représenté sur la figure 3.

Afin de faciliter la lecture des figures, l'adaptateur n'est pas représenté.

Le capot 11 comprend deux parois latérales 110, symétriques par rapport à un plan médian longitudinal du connecteur 9 et reliées entre elles par une paroi supérieure 111. On entend par « plan longitudinal médian » un plan parallèle au plan Oxz du repère orthonormé et passant par un centre du connecteur 9, c'est-à-dire que ce plan longitudinal médian est disposé à égale distance de chacune des parois latérales 110 du capot 11.

Chacune des parois latérales 110 du capot 11 comprend un bord 10 commun avec la paroi supérieure 111 et un bord libre 30, destiné à être disposé au contact du connecteur 9.

Afin de permettre l'insertion du bras d'entrainement dans le dispositif de connexion 8, la paroi supérieure 111 du capot 11 comprend une ouverture 112, notamment visible sur la figure 2. Cette ouverture 112 est également configurée pour permettre la fermeture du capot 11 une fois la partie terminale du bras d'entrainement insérée dans le dispositif de connexion 8. Tel que cela est représenté sur la figure 2, cette ouverture 112 s'étend entre deux bords opposés de la paroi supérieure 111, ces deux bords opposés étant les bords 10 communs entre la paroi supérieure 111 et chaque paroi latérale 110.

Tel qu'illustré sur la figure 2, le capot 11 s'étend principalement selon une première direction longitudinale D1 lorsqu'il est dans sa première position, cette première direction D1 étant parallèle à l'axe Ox du repère orthonormé.

Selon cette première position, le capot 11 comprend une première extrémité longitudinale 113 et une deuxième extrémité longitudinale 114, opposée à la première extrémité longitudinale 113. Tel que cela est par exemple visible sur cette figure 2, la première extrémité longitudinale 113 du capot 11 présente une forme arrondie.

La première extrémité longitudinale 113 et la deuxième extrémité longitudinale 114 du capot 11 présentent, chacune, une forme complémentaire à celle du connecteur 9 contre lequel elles sont disposées. On comprend alors que la forme arrondie de la première extrémité longitudinale 113 du capot 11 permet de faciliter la rotation du capot 11 par rapport au connecteur 9.

Tel que cela est visible sur ces figures 2 et 3, le connecteur 9 s'étend également principalement selon la première direction D1 longitudinale et comprend une zone d'accrochage 14 du connecteur 9 sur l'élément de structure du balai d'essuyage. Cette zone d'accrochage 14 comprend par exemple deux jupes 140, 141 configurés pour enserrer cet élément de structure de ce balai d'essuyage.

Le connecteur 9 présente une première extrémité longitudinale 90 et une deuxième extrémité longitudinale 91, opposée à la première extrémité longitudinale 90 le long de la première direction D1 longitudinale.

Tel qu'on peut le voir sur la figure 3, le connecteur 9 comprend deux flancs 19, symétriques par rapport au plan longitudinal médian du connecteur 9, qui s'étendent parallèlement entre eux et vers le capot 11. Ces flancs 19 délimitent un espace 20 configuré pour recevoir l'adaptateur du dispositif de connexion et sont totalement recouverts par le capot 11 lorsque ce dernier est dans sa première position, dite « fermée ».

La deuxième extrémité longitudinale 91 du connecteur 9 comprend une paroi 21 montante contre laquelle vient s'appuyer la deuxième extrémité longitudinale 114 du capot 11, tel que notamment représenté sur la figure 2.

Tel que précédemment mentionné, le capot 11 est monté en rotation sur le connecteur 9. Le dispositif de connexion 8 comprend ainsi une liaison pivot 15 entre ce capot 11 et ce connecteur 9, cette liaison pivot 15 étant réalisée par une coopération entre la première extrémité longitudinale 90 du connecteur 9 et la première extrémité longitudinale 113 du capot 11.

Cette liaison pivot 15 entre le capot 11 et le connecteur 9 comprend au moins un toron 17 et au moins un palier 16 dans lequel est ménagé un orifice 18 configuré pour recevoir le toron 17. Avantageusement, le toron 17 et l'orifice 18 du palier 16 de la liaison pivot 15 présente des formes complémentaires autorisant la rotation de l'un par rapport à l'autre.

En l'espèce, cette liaison pivot 15, mieux visible sur la figure 3, comprend deux paliers 16 issus de matière avec le connecteur 9 et deux torons 17 issus de matière avec le capot 11. Un orifice 18 est ménagé dans chaque palier 16, ces orifices 18 étant respectivement configurés pour recevoir l'un des torons 17 ménagés sur le capot 11. Les deux paliers 16 et les deux torons 17 sont symétriques par rapport au plan longitudinal médian du connecteur 9.

Selon un exemple de réalisation non illustré ici, la liaison pivot comprend un seul palier issu de matière avec le connecteur et un seul toron issu de matière avec le capot, ce toron étant configuré pour être reçu dans un orifice ménagé dans le palier du connecteur. On comprend que selon cet exemple de réalisation, le palier et le toron sont ménagés d'un même côté par rapport au plan longitudinal médian du connecteur.

Tel qu'illustré sur la figure 3, le capot 11 dans sa deuxième position s'étend principalement selon une deuxième direction D2, perpendiculaire, ou sensiblement perpendiculaire, à la première direction D1. Cette deuxième direction D2 est, selon un exemple représenté sur cette figure 3, une direction verticale, c'est-à-dire parallèle à l'axe Oz du repère orthonormé.

Tel que notamment illustré sur la figure 3, le capot 11 est en rotation autour d'une troisième direction D3, perpendiculaire à la première direction D1 et à la deuxième direction D2. Autrement dit, cette troisième direction D3 est parallèle à l'axe Oy du repère orthonormé tel que représenté sur ces figures et forme une axe de rotation de la liaison pivotante 15.

Tel que précédemment mentionné, le dispositif de connexion selon la présente invention comprend au moins un dispositif de maintien du capot sur le connecteur que nous allons maintenant décrire plus en détails en référence aux figures 4 à 7.

La figure 4 illustre ainsi un exemple de réalisation de ce dispositif de maintien 22, disposé au niveau de la liaison pivot 15 entre le capot 11 et le connecteur 9. Selon cet exemple de réalisation, le dispositif de maintien 22 comprend une nervure 23 et au moins deux gorges référencées 240, 241, la nervure 23 étant destinée à être reçue alternativement dans chacune de ces gorges 240, 241.

Cette figure 4 est une vue de côté de cette liaison pivot 15 sur laquelle le capot 11 a été rendu partiellement transparent afin de rendre visible le dispositif de maintien 22 du capot 11 sur le connecteur 9.

Ce dispositif de maintien 22 a pour objectif de maintenir le capot 11 soit dans sa première position dite « fermée » soit dans sa deuxième position dite « ouverte ». On comprend donc que ce dispositif de maintien 22 permet la rotation du capot 11 entre ces deux positions et ne bloque ce capot 11 que lorsque celui-ci se trouve dans l'une ou l'autre de ces positions.

On entend par « bloque le capot », le fait que lorsque le capot 11 est dans sa première position ou dans sa deuxième position, le dispositif de maintien 22 limite la rotation de ce capot 11 selon le premier sens de rotation SI et selon le deuxième sens de rotation S2. Pour passer d'une position à l'autre, il faut l'intervention d'un utilisateur qui doit appliquer une force selon le premier sens de rotation SI ou selon le deuxième sens de rotation S2 en fonction de la position qu'il souhaite atteindre, de sorte que la nervure 23 puisse sortir de la gorge dans laquelle elle est reçue.

Le dispositif de maintien 22 permet notamment d'éviter une rotation trop importante lors de l'ouverture du capot 11, c'est-à-dire lorsque se capot 11 pivote selon le premier sens de rotation S1. En effet, une rotation trop importante de ce capot 11 pourrait l'endommager et le rendre inutilisable.

Le dispositif de maintien 22 permet également de faciliter l'insertion de la partie terminale du bras d'entrainement en permettant le maintien du capot 11 dans sa deuxième position ouverte. Ainsi, le capot 11 ne peut pas se rabattre spontanément pendant l'insertion de ce bras d'entrainement. Un tel rabattement spontané du capot 11 n'est en effet pas souhaitable puisque cela entrainerait une réduction de l'ouverture 112 à l'égard de la partie terminale du bras d'entrainement, rendant alors son insertion particulièrement compliquée.

Tel qu'illustré sur la figure 4, le dispositif de maintien 22 est agencé au niveau de la liaison pivot 15 entre le connecteur 9 et le capot 11, une partie de ce dispositif de maintien 22 étant ménagée sur au moins l'un des paliers 16 du connecteur 9, et une autre partie de ce dispositif de maintien 22 étant ménagée sur le capot 11, et avantageusement, à proximité des torons 17 reçus dans les orifices 18 ménagés dans les paliers 16, tel que précédemment décrits. Plus précisément, l'autre partie de ce dispositif de maintien 22 est répartie autour des torons 17.

Tel que mentionné ci-dessus, le dispositif de maintien 22 selon l'exemple de réalisation illustré sur la figure 4 comprend une première gorge 240 et une deuxième gorge 241. La première gorge 240 et la deuxième gorge 241 sont respectivement affectées au maintien du capot dans sa première position fermée et dans sa deuxième position ouverte. Une troisième gorge 242 peut également être ménagée au niveau de la liaison pivot 15, cette troisième gorge 242 étant une gorge de guidage, configurée pour faciliter l'assemblage du capot 11 sur le connecteur 9.

Selon l'exemple illustré sur la figure 4, cette troisième gorge 242 est ménagée dans le prolongement de la première gorge 240.

Lorsque l'utilisateur souhaite monter le balai d'essuyage sur son bras d'entrainement, il doit, dans un premier temps, faire pivoter le capot 11 afin que celui-ci prenne sa deuxième position. En exerçant une force suffisante, l'utilisateur peut faire sortir la nervure 23 de la première gorge 240, puis faire pivoter ce capot 11 selon le premier sens de rotation SI précédemment décrit.

Au cours de la rotation du capot 11 par rapport au connecteur 9, la nervure 23 se déplace entre la première gorge 240 et la deuxième gorge 241, tel que cela est représenté sur la figure 4. On comprend que pour permettre cette rotation, les parois latérales 110 du capot 11 sont réalisées dans un matériau à déformation élastique, c'est-à-dire que ces parois latérales 110 sont configurées pour s'écarter afin de permettre à la nervure 23 de sortir de la première gorge 240 dans laquelle elle est reçue. Une fois la rotation effectuée, les parois latérales 110 du capot 11 sont configurées pour reprendre leur écartement initial afin de permettre le placement de la nervure 23 dans la deuxième gorge 241, cette deuxième gorge 241 étant configurée pour bloquer le capot 11 dans sa deuxième position, ouverte.

Une fois le bras d'entrainement monté dans le dispositif de connexion par introduction de la partie terminale dans l'ouverture du capot 11, l'utilisateur peut faire pivoter le capot 11 selon le deuxième sens de rotation S2, jusqu'à ce que la nervure 23 soit de nouveau reçue dans la première gorge 240. Tel que précédemment décrit, lorsque la nervure 23 est reçue dans la première gorge 240, le capot 11 est maintenu dans sa première position fermée, cette première position du capot 11 permettant de bloquer au moins en partie le bras d'entrainement dans le dispositif de connexion. On comprend que les étapes de rotation pour passer de la première position à la deuxième position sont similaires à celles permettant de passer de la deuxième position à la première position.

Ainsi, un procédé d'assemblage du capot 11 sur le connecteur 9 peut comprendre une étape au cours de laquelle la nervure 23 ménagée sur le capot 11 est reçue dans la troisième gorge 242, et une étape de translation du capot 11 par rapport au connecteur 9 jusqu'à ce que les torons 17 ménagés sur le capot 11 soient respectivement reçus dans l'un des orifices 18 ménagés dans les paliers 16 du connecteur 9.

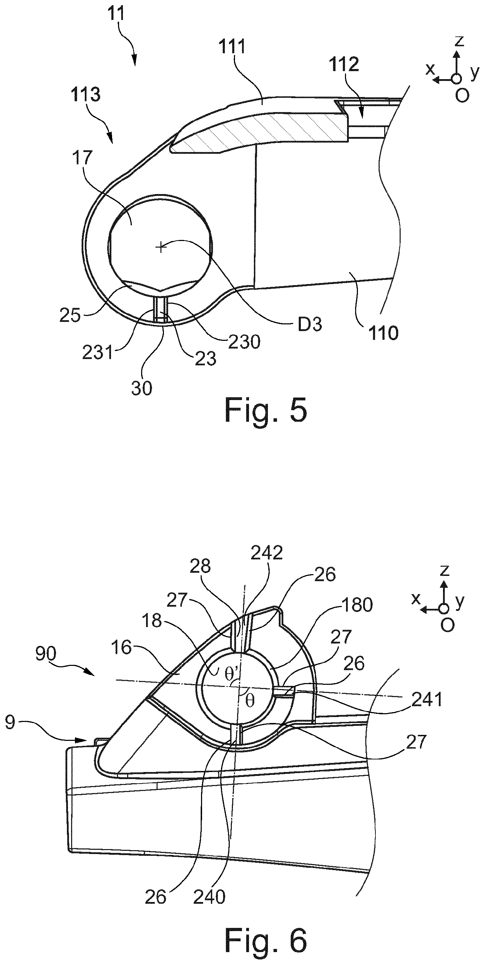

Nous allons maintenant décrire plus en détails la nervure 23 et les gorges 240, 241, 242 formant le dispositif de maintien du capot 11 sur le connecteur 9, en référence aux figures 5 et 6.

La figure 5 illustre la première extrémité longitudinale 113 du capot 11, vue selon une coupe passant par un plan longitudinal médian de ce capot 11. Pour rappel, on entend par « plan longitudinal médian » un plan parallèle au plan Oxz du repère orthonormé et passant par un centre du capot 11. Cette figure 5 rend ainsi visible l'un des torons 17 de ce capot 11. Tel que précédemment mentionné, les deux torons de ce capot 11 sont symétriques, on comprend donc que la description du toron 17 illustré sur la figure 5 est transposable à l'autre toron, non visible sur cette figure 5.

Ce toron 17 présente une forme sensiblement circulaire et comprend un chanfrein 25 configuré pour faciliter l'insertion de ce toron 17 dans l'orifice ménagé dans au moins l'un des paliers du connecteur. Selon un exemple de réalisation illustré sur cette figure 5, la nervure 23 est issue de matière avec le toron 17 et s'étend depuis ce toron jusqu'au bord libre 30 de la paroi latérale 110 correspondante. Plus précisément, cette nervure 23 est ménagée au droit du chanfrein 25 de ce toron 17. Tel que cela est représenté, cette nervure 23 est rectiligne et s'étend radialement par rapport à l'axe de rotation D3 de la liaison pivot. La nervure 23 comprend en outre deux flancs 230, 231 parallèles.

La figure 6 illustre quant à elle la première extrémité longitudinale 90 du connecteur 9, sur laquelle est ménagé l'un des paliers 16 du connecteur 9, vue selon une coupe réalisée selon le plan longitudinal médian de ce connecteur 9. Tel que précédemment décrit, ce palier 16 comprend l'orifice 18 configuré pour recevoir l'un des torons du capot.

Selon un exemple de réalisation illustré sur cette figure 6, trois gorges 240, 241, 242 sont ménagées dans ce palier 16. Tel que précédemment mentionné, la première gorge 240 et la deuxième gorge 241 sont respectivement configurées pour maintenir le capot dans sa première position ou dans sa deuxième position tandis que la troisième gorge 242 permet de guider le capot sur le connecteur 9 lors de son assemblage.

Chacune de ces gorges 240, 241, 242 est formée par une saignée rectiligne qui s'étend radialement depuis l'orifice 18 ménagé dans le palier 16. Tel qu'illustré, l'orifice 18 est délimité par un contour 180 circulaire qui présente un chanfrein. On comprend que ce chanfrein s'étend sur toute une périphérie de l'orifice 18. Avantageusement, ce chanfrein facilite l'insertion du toron dans cet orifice 18 pour former la liaison pivot.

Chacune de ces gorges 240, 241, 242 est délimitée par un premier bord 26 et par un deuxième bord 27 et comprend un fond 28. On comprend que pour permettre qu'une partie d'un flanc de la nervure soit en butée contre au moins une partie d'un des bords 26, 27 de l'une de ces gorges 240, 241, 242, une profondeur de chaque gorge, mesurée entre le fond 28 de la gorge 240, 241, 242 concernée et l'un de ses bords 26, 27 est égale ou supérieure à une épaisseur de la nervure, cette épaisseur de la nervure étant mesurée le long d'une droite parallèle à l'axe Oy du repère orthonormé. Ainsi, lorsque la nervure est reçue dans l'une des gorges 240, 241, 242, la paroi latérale du capot comprenant le toron duquel est issue la nervure est disposée au contact du palier 16 sur lequel sont ménagées ces gorges 240, 241, 242.

Tel que cela est représenté sur la figure 6, la première gorge 240 et la deuxième gorge 241 délimitent ensemble un premier secteur angulaire θ du palier 16. Selon l'exemple de réalisation illustré sur la figure 6, ce premier secteur angulaire est sensiblement égal à 90°. En d'autres termes, le premier bord 26 et le deuxième bord 27 de la première gorge 240 s'étendent principalement selon des directions perpendiculaires à des directions selon lesquelles s'étendent principalement respectivement le premier bord 26 et le deuxième bord 27 de la deuxième gorge 241.

La troisième gorge 242 est quant à elle ménagée en toutes positions d'un deuxième secteur angulaire θ', opposé au premier secteur angulaire θ par rapport à l'axe de rotation D3 de la liaison pivot 15. Selon l'exemple de réalisation illustré sur la figure 6, la troisième gorge 242 est ménagée dans le prolongement de la première gorge 240, c'est-à-dire à la limite du deuxième secteur angulaire θ'. Ainsi, lorsque le capot est monté sur le connecteur, ce capot est directement inséré dans sa première position.

Selon un exemple de réalisation non illustré ici, la nervure peut être ménagée sur au moins l'un des paliers du connecteur et au moins une gorge peut quant à elle être ménagée à proximité d'au moins l'un des torons ménagés sur le capot. Selon cet exemple de réalisation, la nervure alors ménagée sur le(s) palier(s) du connecteur est configurée pour coopérer avec l'au moins une gorge ménagé à proximité du/des toron(s), de la même manière que décrit ci-dessus.

Selon un raffinement de la présente invention, un organe 29 peut être agencé pour augmenter l'effort de rotation du capot par rapport au connecteur.

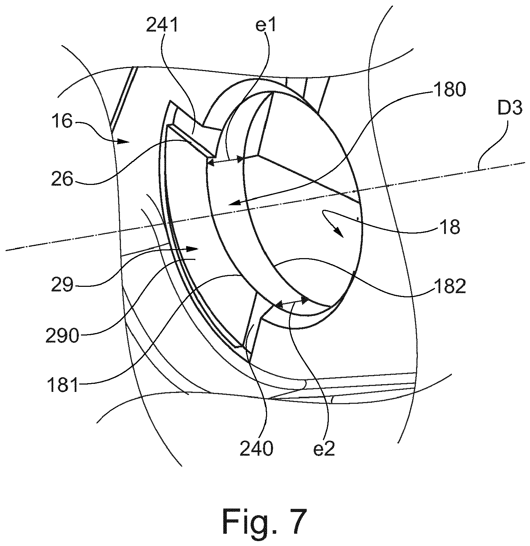

Un exemple de réalisation de cet organe 29 agencé pour augmenter l'effort de rotation est illustré sur la figure 7. Cette figure 7 est une vue de détails de l'autre palier 16 du connecteur 9, c'est-à-dire du palier 16 non représenté sur la figure 6. Tel que précédemment mentionné, ces deux paliers 16 sont symétriques par rapport au plan longitudinal médian du connecteur.

Tel que cela est visible sur la figure 7, l'organe 29 agencé pour augmenter l'effort de rotation du capot par rapport au connecteur est réalisé par une paroi inclinée 290 ménagée sur le palier 16, entre la première gorge 240 et la deuxième gorge 241. Cette paroi inclinée 290 permet notamment un écartement progressif des parois latérales du capot lors de sa rotation sur le connecteur 9.

Avantageusement, cette paroi inclinée 290 permet également à l'utilisateur de mieux maitriser l'effort appliqué sur le capot en lui permettant d'avoir un ressenti au cours de la rotation de ce capot sur le connecteur. Autrement dit, plus l'utilisateur se rapproche de la deuxième gorge 241, plus la force à appliquer sur le capot pour le faire tourner est importante. De plus, lorsque la nervure ménagée sur le capot passe la première arête 26 de cette deuxième gorge 241, les parois latérales du capot reprennent leur position initiale de façon soudaine, indiquant alors sans doute possible à l'utilisateur que le capot a atteint sa deuxième position, prêt pour le montage du balai d'essuyage sur le bras d'entraînement.

Ainsi, le contour 180 délimitant l'orifice 18 ménagé dans le palier 16 présente différentes épaisseurs. Tel que représenté sur la figure 7, ce contour 180 est délimité par une première arête 181 et par une deuxième arête 182 opposées l'une à l'autre le long de l'axe de rotation D3 de la liaison pivot.

Tel qu'illustré, une première épaisseur e1 est supérieure à une deuxième épaisseur e2 de ce contour 180. Ces épaisseurs e1 et e2 sont toutes deux mesurées entre la première arête 181 et la deuxième arête 182 de ce contour 180, selon une direction parallèle à l'axe de rotation D3 de la liaison pivot. La première épaisseur e1 est mesurée à proximité de la deuxième gorge 241 tandis que la deuxième épaisseur e2 est mesurée à proximité de la première gorge 240.

On comprend ainsi que l'effort à fournir pendant la rotation du capot selon le premier sens de rotation, c'est-à-dire pour ouvrir ce capot, est plus important que l'effort à fournir pendant la rotation de ce capot selon le deuxième sens de rotation, c'est-à-dire pour fermer ce capot.

On comprend également que l'effort à fournir pour déloger la nervure de la première gorge 240 est moins important que l'effort à fournir pour déloger cette nervure de la deuxième gorge 241.

Cette pente progressive peut également être réalisée en sens inverse, rendant alors l'effort nécessaire plus important dans le deuxième sens de rotation.

Il est entendu que cette pente progressive n'est qu'un exemple de réalisation de l'organe agencé pour augmenter l'effort de rotation du capot par rapport au connecteur et que tout autre organe permettant d'obtenir ce même effet est également envisageable.

On comprend de ce qui précède que la présente invention permet ainsi de faciliter l'assemblage d'un capot sur un connecteur d'un dispositif de connexion d'un système d'essuyage pour véhicule et de maintenir en position ce capot par rapport au connecteur afin de permettre, dans un premier temps, une insertion d'un bras d'entrainement sur ce dispositif de connexion et dans un deuxième temps de bloquer ce bras d'entrainement dans ce dispositif de connexion, tout en évitant le risque d'une rotation trop importante du capot par rapport au connecteur qui pourrait endommager ce capot.

L'invention ne saurait toutefois se limiter aux moyens et configurations décrits et illustrés ici. En particulier, la forme et les dimensions de la nervure et/ou des gorges du dispositif de maintien du capot sur le connecteur peuvent être modifiées sans nuire à l'invention, dans la mesure où elles remplissent les fonctionnalités décrites dans le présent document.

## Revendications

1. Dispositif de connexion (8) destiné à relier un balai d'essuyage (4) à un bras d'entrainement (2) d'un système d'essuyage (1) pour véhicule, comprenant au moins un connecteur (9) et un capot (11) monté en rotation sur le connecteur (9), le dispositif de connexion (8) comprenant au moins un dispositif de maintien (22) du capot (11) sur le connecteur (9) dans au moins une position, le dispositif de maintien (22) déterminant la position du capot (11) sur le connecteur (9) en limitant la rotation de ce capot (11) sur le connecteur (9) selon deux sens de rotation (S1, S2), ledit dispositif de connexion (8) comprenant une liaison pivot (15) entre le capot (11) et le connecteur (9), cette liaison pivot (15) comprenant au moins un palier (16) et au moins un toron (17), le toron (17) étant reçu dans un orifice (18) ménagé dans le palier (16), **caractérisé en ce que** le dispositif de maintien (22) du capot (11) sur le connecteur (9) est disposé au moins en partie sur le palier (16).

2. Dispositif de connexion (8) selon la revendication 1, dans lequel le dispositif de maintien (22) du capot (11) sur le connecteur (9) est disposé au moins en partie autour du toron (17).

3. Dispositif de connexion (8) selon l'une quelconque des revendications précédentes, dans lequel le dispositif de maintien (22) du capot (11) sur le connecteur (9) comprend au moins une nervure (23) et au moins une gorge (240, 241), la nervure (23) étant destinée à être reçue dans la gorge (240, 241).

4. Dispositif de connexion (8) selon la revendication précédente, dans lequel le dispositif de maintien (22) du capot (11) sur le connecteur (9) comprend une unique nervure (23), au moins une première gorge (240) et au moins une deuxième gorge (241), la nervure (23) étant destinée à être reçue alternativement dans chacune des gorges (240, 241).

5. Dispositif de connexion (8) selon la revendication précédente, dans lequel la première gorge (240) et la deuxième gorge (241) du dispositif de maintien (22) du capot (11) sur le connecteur (9) délimitent ensemble un premier secteur angulaire (θ) et dans lequel une troisième gorge (242) est ménagée dans un deuxième secteur angulaire (θ') opposé au premier secteur angulaire (θ) par rapport à un axe de rotation (D3) de la liaison pivot (15).

6. Dispositif de connexion (8) selon la revendication précédente, dans lequel la troisième gorge (242) est ménagée dans le prolongement de l'une des deux gorges (240, 241), en passant par l'axe de rotation (D3) de la liaison pivot (15).

7. Dispositif de connexion (8) selon l'une quelconque des revendications 3 à 6, dans lequel la nervure (23) est ménagée sur le capot (11) et dans lequel au moins une gorge (240, 241) est ménagée sur le connecteur (9).

8. Dispositif de connexion (8) selon l'une quelconque des revendications 3 à 6, dans lequel la nervure (23) est ménagée sur le connecteur (9) et dans lequel au moins une gorge (240, 241) est ménagée sur le capot (11).

9. Dispositif de connexion (8) selon l'une quelconque des revendications précédentes, dans lequel le capot (11) est configuré pour prendre une première position et une deuxième position, cette première position et cette deuxième position étant déterminées par le dispositif de maintien (22) du capot (11) sur le connecteur (9), le capot (11) dans sa première position s'étendant selon une première direction (D1) longitudinale et le capot (11) dans sa deuxième position s'étendant selon une deuxième direction (D2) différente de la première direction (D1).

10. Dispositif de connexion (8) selon la revendication précédente, dans lequel le dispositif de maintien (22) du capot (11) sur le connecteur (9) comprend un organe (29) agencé pour augmenter l'effort de rotation du capot (11) par rapport au connecteur (9) entre les deux positions prises par le capot.

11. Dispositif de connexion (8) selon la revendication précédente, dans lequel l'organe (29) agencé pour augmenter l'effort de rotation du capot (11) par rapport au connecteur (9) entre sa première position et sa deuxième position est une paroi inclinée (290) formée entre les deux gorges (240, 241) du dispositif de maintien (22) du capot (11) sur le connecteur (9).

12. Dispositif de connexion (8) selon l'une quelconque des revendications précédentes, comprenant deux dispositifs de maintien (22) du capot (11) sur le connecteur (9) symétriques par rapport à un plan longitudinal et vertical médian du connecteur (9).

13. Système d'essuyage (1) pour véhicule comprenant au moins un balai d'essuyage (4) relié à un bras d'entrainement (2) par un dispositif de connexion (8) selon l'une quelconque des revendications précédentes.

## Patentansprüche

1. Verbindungsvorrichtung (8), welche dazu bestimmt ist, ein Wischerblatt (4) mit einem Antriebsarm (2) eines Wischersystems (1) für ein Fahrzeug zu verbinden, und wenigstens einen Verbinder (9) und eine drehbar auf dem Verbinder (9) gelagerte Kappe (11) umfasst, wobei die Verbindungsvorrichtung (8) wenigstens eine Vorrichtung zum Halten (22) der Kappe (11) auf dem Verbinder (9) in wenigstens einer Position umfasst, wobei die Haltevorrichtung (22) die Position der Kappe (11) auf dem Verbinder (9) bestimmt, indem sie die Drehung dieser Kappe (11) auf dem Verbinder (9) in zwei Drehrichtungen (S1, S2) begrenzt, wobei die Verbindungsvorrichtung (8) eine Schwenkverbindung (15) zwischen der Kappe (11) und dem Verbinder (9) umfasst, wobei diese Schwenkverbindung (15) wenigstens ein Lager (16) und wenigstens einen Drehzapfen (17) umfasst, wobei der Drehzapfen (17) in einer Öffnung (18) aufgenommen ist, die in dem Lager (16) ausgebildet ist,
**dadurch gekennzeichnet, dass** die Vorrichtung zum Halten (22) der Kappe (11) auf dem Verbinder (9) wenigstens teilweise am Lager (16) angeordnet ist.

2. Verbindungsvorrichtung (8) nach Anspruch 1, wobei die Vorrichtung zum Halten (22) der Kappe (11) auf dem Verbinder (9) wenigstens teilweise um den Drehzapfen (17) herum angeordnet ist.

3. Verbindungsvorrichtung (8) nach einem der vorhergehenden Ansprüche, wobei die Vorrichtung zum Halten (22) der Kappe (11) auf dem Verbinder (9) wenigstens eine Rippe (23) und wenigstens eine Nut (240, 241) umfasst, wobei die Rippe (23) dazu bestimmt ist, in der Nut (240, 241) aufgenommen zu werden.

4. Verbindungsvorrichtung (8) nach dem vorhergehenden Anspruch, wobei die Vorrichtung zum Halten (22) der Kappe (11) auf dem Verbinder (9) eine einzige Rippe (23), wenigstens eine erste Nut (240) und wenigstens eine zweite Nut (241) umfasst, wobei die Rippe (23) dazu bestimmt ist, abwechselnd in jeder der Nuten (240, 241) aufgenommen zu werden.

5. Verbindungsvorrichtung (8) nach dem vorhergehenden Anspruch, wobei die erste Nut (240) und die zweite Nut (241) der Vorrichtung zum Halten (22) der Kappe (11) auf dem Verbinder (9) zusammen einen ersten Winkelsektor (θ) begrenzen, und wobei eine dritte Nut (242) in einem zweiten Winkelsektor (θ') ausgebildet ist, der, bezogen auf eine Drehachse (D3) der Schwenkverbindung (15), dem ersten Winkelsektor (θ) gegenüberliegt.

6. Verbindungsvorrichtung (8) nach dem vorhergehenden Anspruch, wobei die dritte Nut (242) in der Verlängerung einer der zwei Nuten (240, 241) ausgebildet ist, wobei sie durch die Drehachse (D3) der Schwenkverbindung (15) verläuft.

7. Verbindungsvorrichtung (8) nach einem der Ansprüche 3 bis 6, wobei die Rippe (23) an der Kappe (11) ausgebildet ist, und wobei wenigstens eine Nut (240, 241) am Verbinder (9) ausgebildet ist.

8. Verbindungsvorrichtung (8) nach einem der Ansprüche 3 bis 6, wobei die Rippe (23) am Verbinder (9) ausgebildet ist, und wobei wenigstens eine Nut (240, 241) an der Kappe (11) ausgebildet ist.

9. Verbindungsvorrichtung (8) nach einem der vorhergehenden Ansprüche, wobei die Kappe (11) dafür ausgelegt ist, eine erste Position und eine zweite Position einzunehmen, wobei diese erste Position und diese zweite Position von der Vorrichtung zum Halten (22) der Kappe (11) auf dem Verbinder (9) bestimmt werden, wobei sich die Kappe (11) in ihrer ersten Position in einer längs verlaufenden ersten Richtung (D1) erstreckt und sich die Kappe (11) in ihrer zweiten Position in einer zweiten Richtung (D2), die von der ersten Richtung (D1) verschieden ist, erstreckt.

10. Verbindungsvorrichtung (8) nach dem vorhergehenden Anspruch, wobei die Vorrichtung zum Halten (22) der Kappe (11) auf dem Verbinder (9) ein Element (29) umfasst, das dafür eingerichtet ist, die Drehkraft der Kappe (11) in Bezug auf den Verbinder (9) zwischen den zwei Positionen, die von der Kappe eingenommen werden, zu vergrößern.

11. Verbindungsvorrichtung (8) nach dem vorhergehenden Anspruch, wobei das Element (29), das dafür eingerichtet ist, die Drehkraft der Kappe (11) in Bezug auf den Verbinder (9) zwischen ihrer ersten Position und ihrer zweiten Position zu vergrößern, eine geneigte Wand (290) ist, die zwischen den zwei Nuten (240, 241) der Vorrichtung zum Halten (22) der Kappe (11) auf dem Verbinder (9) ausgebildet ist.

12. Verbindungsvorrichtung (8) nach einem der vorhergehenden Ansprüche, welche zwei Vorrichtungen zum Halten (22) der Kappe (11) auf dem Verbinder (9) umfasst, die symmetrisch in Bezug auf eine längs verlaufende und vertikale Mittelebene des Verbinders (9) sind.

13. Wischersystem (1) für ein Fahrzeug, welches wenigstens ein Wischerblatt (4) umfasst, das mit einem Antriebsarm (2) durch eine Verbindungsvorrichtung (8) nach einem der vorhergehenden Ansprüche verbunden ist.

## Claims

1. Connecting device (8) intended to join a wiper blade (4) to a driving arm (2) of a wiping system (1) for a vehicle, comprising at least one connector (9) and a cover (11) mounted in a rotatable manner on the connector (9), the connecting device (8) comprising at least one holding device (22) for holding the cover (11) on the connector (9) in at least one position, the holding device (22) determining the position of the cover (11) on the connector (9) by limiting the rotation of this cover (11) on the connector (9) in two directions of rotation (Si, S2), the connecting device (8) comprising a pivot connection (15) between the cover (11) and the connector (9), this pivot connection (15) comprising at least one bearing (16) and at least one trunnion (17), the trunnion (17) being received in an orifice (18) formed in the bearing (16), **characterized in that** the holding device (22) for holding the cover (11) on the connector (9) is disposed at least partially on the bearing (16).

2. Connecting device (8) according to claim 1, wherein the holding device (22) for holding the cover (11) on the connector (9) is disposed at least partially around the trunnion (17).

3. Connecting device (8) according to any one of the preceding claims, wherein the holding device (22) for holding the cover (11) on the connector (9) comprises at least one rib (23) and at least one groove (240, 241), the rib (23) being intended to be received in the groove (240, 241).

4. Connecting device (8) according to the preceding claim, wherein the holding device (22) for holding the cover (11) on the connector (9) comprises a single rib (23), at least one first groove (240) and at least one second groove (241), the rib (23) being intended to be received in either one of the grooves (240, 241).

5. Connecting device (8) according to the preceding claim, wherein the first groove (40) and the second groove (241) of the holding device (22) for holding the cover (11) on the connector (9) jointly delimit a first angular sector (θ), and wherein a third groove (242) is formed in a second angular sector (θ') on the opposite side from the first angular sector (θ) with respect to an axis of rotation (D3) of the pivot connection (15).

6. Connecting device (8) according to the preceding claim, wherein the third groove (242) is formed in continuation of one of the two grooves (240, 241), passing through the axis of rotation (D3) of the pivot connection (15).

7. Connecting device (8) according to any one of Claims 3 to 6, wherein the rib (23) is formed on the cover (11), and wherein at least one groove (240, 241) is formed on the connector (9).

8. Connecting device (8) according to any one of Claims 3 to 6, wherein the rib (23) is formed on the connector (9), and wherein at least one groove (240, 241) is formed on the cover (11).

9. Connecting device (8) according to any one of the preceding claims, wherein the cover (11) is configured to take up a first position and a second position, this first position and this second position being determined by the holding device (22) for holding the cover (11) on the connector (9), the cover (11), in its first position, extending in a first longitudinal direction (Di), and the cover (11), in its second position, extending in a second direction (D2) different from the first direction (D1).

10. Connecting device (8) according to the preceding claim, wherein the holding device (22) for holding the cover (11) on the connector (9) comprises a member (29) designed to increase the force for rotating the cover (11) with respect to the connector (9) between the two positions taken up by the cover.

11. Connecting device (8) according to the preceding claim, wherein the member (29) designed to increase the force for rotating the cover (11) with respect to the connector (9) between its first position and its second position is an inclined wall (290) formed between the two grooves (240, 241) of the holding device (22) for holding the cover (11) on the connector (9).

12. Connecting device (8) according to any one of the preceding claims, comprising two holding devices (22) for holding the cover (11) on the connector (9), which are symmetric with respect to a longitudinal and vertical mid-plane of the connector (9).

13. Wiping system (1) for a vehicle, comprising at least one wiper blade (4) joined to a driving arm (2) by a connecting device (8) according to any one of the preceding claims.
